# EUROPEAN PATENT APPLICATION

(11) **EP 4 804 275 A1**
(43) Date of publication of application: **09.09.2026**
(21) Application number: 24884898.8
(22) Date of filing: 31.10.2024
(51) Int. Cl.: H01M 10/0567, H01M 10/0525

(54) **ELECTROLYTE SOLUTION AND SODIUM-ION BATTERY**

(30) Priority: 02.11.2023 CN 202311449268
(71) Applicant: Guangzhou Tinci Materials Technology Co., Ltd, Guangzhou, Guangdong 510760 (CN); Jiujiang Tinci Materials Technology Co., Ltd., Jiujiang, Jiangxi 332500 (CN)
(72) Inventor: GAO, Yuanpeng, Guangzhou, Guangdong 510765 (CN); XIE, Tian, Guangzhou, Guangdong 510765 (CN); SUN, Wenpo, Guangzhou, Guangdong 510765 (CN)
(74) Representative: IPAZ
(86) International application number: PCT/CN2024/128874
(87) International publication number: WO 2025/092899

(57) **Abstract**

An electrolyte solution and a sodium-ion battery. The electrolyte solution comprises a sodium salt, an additive, and an organic solvent, wherein the sodium salt comprises sodium hexafluorophosphate and sodium bis(fluorosulfonyl)imide, and the additive comprises pentaerythritol bicyclic sulfate; and the electrolyte solution comprises: in percentage by mass, 2-15 wt% of sodium hexafluorophosphate, 0.1-20 wt% of sodium bis(fluorosulfonyl)imide, 0.1-5 wt% of pentaerythritol bicyclic sulfate, and the balance being an organic solvent. The electrolyte solution has relatively strong stability in a room-temperature or high-temperature environment, so that stringent environmental requirements in stages of the preparation, transportation, and storage of electrolyte solutions are reduced to a certain extent, the production cost can be effectively controlled, and when the electrolyte solution is applied to a sodium-ion battery, the cycling stability of the battery can be improved.

## Description

The present application claims the priority of the Chinese Patent Application No. 202311449268.9, titled "ELECTROLYTE SOLUTION AND USE THEREOF", filed before the China National Intellectual Property Administration on November 02, 2023, which is incorporated herein by reference in its entirety.

### TECHNICAL FIELD

The present application belongs to the field of sodium-ion batteries, relates to an electrolyte solution, and in particular to an electrolyte solution and a sodium-ion battery.

### BACKGROUND

Lithium-ion batteries are widely used in new energy vehicles, various portable electronic devices and energy storage fields due to their advantages of high energy density, long cycle life and small size. However, due to the low lithium reserves and uneven resource distribution, the cost of the lithium-ion battery has increased year by year, so it is urgent to develop a new battery system. Sodium and lithium are of the same family, with similar chemical properties and richer reserves, up to 2.36%, lower cost and better safety. The sodium-ion battery has the advantages of high energy density and cost-effectiveness, which can meet the needs of future sustainable energy development. However, the sodium-ion battery still has some challenges in high-temperature circulation and high-temperature storage.

As an important part of the sodium-ion battery, the electrolyte solution accounts for a large proportion of the battery, so the performance of the electrolyte solution will greatly affect the performance of the battery. At present, in order to effectively improve the service life and reliability of the sodium-ion battery in high-temperature storage environments, sodium difluorophosphate and ethylene sulfate are widely used as electrolyte additives. However, the electrolyte solution including sodium difluorophosphate needs to be stored at low temperatures to maintain its stability and avoid decomposition in normal-temperature or high-temperature environments. Moreover, because there is a trace amount of water in the electrolyte solution itself, ethylene sulfate is prone to hydrolysis at normal or high temperatures. The hydrolysate includes sulfuric acid and ethylene glycol sulfate, which increase the overall acidity of the electrolyte solution. Furthermore, this reaction will intensify under a high-temperature storage environment, which undoubtedly limits the large-scale application of ethylene sulfate.

Therefore, the electrolyte solution including ethylene sulfate and/or sodium difluorophosphate often requires stricter environmental control in the preparation, transportation and storage, and the storage shelf life of the electrolyte solution is short, resulting in high costs.

### SUMMARY

To overcome the disadvantages, the present application provides an electrolyte solution, which has relatively strong stability in a normal-temperature or high-temperature environment, so that stringent environmental requirements in stages of the preparation, transportation and storage of the electrolyte solution are reduced to a certain extent, the storage life of the electrolyte solution is extended, and the production cost can be effectively controlled. A first aspect of the present application provides an electrolyte solution including a sodium salt, an additive and an organic solvent, where the sodium salt includes sodium hexafluorophosphate and sodium bis(fluorosulfonyl)imide, and the additive includes pentaerythritol bicyclic sulfate; and
the electrolyte solution includes, in mass percentage: 2 to 15 wt% of sodium hexafluorophosphate, 0.1 to 20 wt% of sodium bis(fluorosulfonyl)imide, 0.1 to 5 wt% of pentaerythritol bicyclic sulfate, and the organic solvent as the balance.

Further, a mass percentage of sodium hexafluorophosphate in the electrolyte solution ranges from 6 wt% to 14 wt%.

Further, a mass percentage of pentaerythritol bicyclic sulfate in the electrolyte solution ranges from 1 wt% to 2 wt%.

Further, a mass percentage of sodium bis(fluorosulfonyl)imide in the electrolyte solution ranges from 2 wt% to 8 wt%.

Further, the organic solvent includes at least one of carbonates, fluorocarbonates, carboxylic esters, fluorocarboxylic esters, ethers and fluoroethers.

Further, the electrolyte solution further includes a sodium salt additive, and the sodium salt additive includes at least one of sodium perchlorate, sodium bis(oxalato)borate, sodium difluoro(oxalato)borate and sodium bis(trifluoromethylsulfonyl)imide.

Further, a mass percentage of the sodium salt additive in the electrolyte solution ranges from 0.01 wt% to 1 wt%.

Further, the electrolyte solution further includes an organic additive, and the organic additive includes at least one of vinyl ethylene carbonate, fluoroethylene carbonate, vinylene carbonate, 1,6-hexylene diisocyanate, 4-ethynyl-1,3-dioxolan-2-one, trans-difluoroethylene carbonate, 1,3-propane sultone, 1,4-propane sultone, prop-1-ene-1,3-sultone, 1,3,2-dioxathiolane 2,2-dioxide, 4-propyl-1,3,2-dioxathiolane 2,2-dioxide, methylene methanedisulfonate, 1,2-ethanedisulfonic anhydride, tris(trimethylsilyl) borate, succinonitrile, (ethoxy)pentafluorocyclotriphosphazene, tert-butylbenzene, tert-amylbenzene, fluorobenzene, and cyclohexylbenzene.

Further, a mass percentage of the organic additive in the electrolyte solution ranges from 0.1 wt% to 20 wt%.

A second aspect of the present application provides a sodium-ion battery including the electrolyte solution provided in the first aspect of the present application. The sodium-ion battery provided in the second aspect of the present application has good cycle performance.

The electrolyte solution disclosed in the present application includes sodium hexafluorophosphate, sodium bis(fluorosulfonyl)imide and pentaerythritol bicyclic sulfate, where the conductivity and ion transport rate of sodium hexafluorophosphate are relatively high, which can improve the conductivity of the whole electrolyte solution system, but the stability and the safety of sodium hexafluorophosphate are poor. In the present application, by using sodium hexafluorophosphate and sodium bis(fluorosulfonyl)imide as the main salts of the sodium salt and pentaerythritol bicyclic sulfate as the additive, and by limiting the mass percentages of sodium hexafluorophosphate, sodium bis(fluorosulfonyl)imide and pentaerythritol bicyclic sulfate in the electrolyte solution, the three components cooperate synergistically to ultimately obtain an electrolyte solution with strong storage stability. Therefore, the strictness of environmental temperature control can be reduced during preparation, storage and use, so that the electrolyte solution can be stored in harsh environments such as high temperatures, thereby improving the storage life of the electrolyte solution and achieving the purpose of reducing storage and transportation costs. In addition, since the electrolyte solution has good high-temperature stability, it can accelerate the wetting at high temperatures so that good wetting among the electrolyte solution, the electrode and the separator is formed, thereby improving the problem of poor wettability of the electrolyte solution in the sodium-ion battery.

### DETAILED DESCRIPTION

In order to make the objectives, technical solutions and advantages of the present application clearer, the technical solutions in the embodiments of the present application will be clearly and completely described below in light of the embodiments of the present application. It is obvious that the described embodiments are part of the embodiments of the present application, not all of them. Based on the embodiments in the present application, all other embodiments obtained by the skilled in the art without making creative labor are within the scope of protection of the present application.

A first aspect of the present application provides an electrolyte solution including a sodium salt, an additive and an organic solvent, where the sodium salt includes sodium hexafluorophosphate and sodium bis(fluorosulfonyl)imide, and the additive includes pentaerythritol bicyclic sulfate; and
the electrolyte solution includes, in mass percentage: 2 to 15 wt% of sodium hexafluorophosphate, 0.1 to 20 wt% of sodium bis(fluorosulfonyl)imide, 0.1 to 5 wt% of pentaerythritol bicyclic sulfate, and the organic solvent as the balance.

The present application does not limit the source of each component. Commercially available products or conventional preparation methods well known to those skilled in the art may be used.

According to the technical solution provided in the present application, the electrolyte solution includes sodium hexafluorophosphate, sodium bis(fluorosulfonyl)imide and pentaerythritol bicyclic sulfate, sodium hexafluorophosphate and sodium bis(fluorosulfonyl)imide are used as the main salts of complex sodium salt, pentaerythritol bicyclic sulfate is used as the electrolyte solution additive, and the mass percentages of the three components in the electrolyte solution is limited simultaneously, so that the storage stability of the electrolyte solution can be obviously improved, especially the storage stability under high-temperature and severe environment, the storage life of electrolyte solution is prolonged, and the purpose of reducing the storage and transportation costs is achieved. Based on this phenomenon, the inventors analyzed the raw materials with improved stability, and believes that the coordination of sodium hexafluorophosphate, sodium bis(fluorosulfonyl)imide and pentaerythritol bicyclic sulfate can change the solvated structure of the electrolyte solution system to form a more stable solvated structure with a sodium ion as a core, pentaerythritol bicyclic sulfate and an organic solvent molecule as a middle layer, and a hexafluorophosphate ion and a bis(fluorosulfonyl)imide anion as an outer layer, reducing the decomposition of sodium hexafluorophosphate at high temperatures. Moreover, when the mass percentages of sodium hexafluorophosphate, sodium bis(fluorosulfonyl)imide and pentaerythritol bicyclic sulfate in the electrolyte solution are within the limited range, the decomposition rate of the sodium salt in a high-temperature environment can be further reduced so that the stability of the electrolyte solution is significantly improved in a normal-temperature or high-temperature storage environment, thereby reducing the environmental requirements of the electrolyte solution during preparation, storage or use, and achieving the purpose of reducing costs.

In addition, the sodium-ion battery including the above-mentioned electrolyte solution also has excellent ionic conductivity, electrical conductivity and wetting performance. The reason is that the electrolyte solution of the present application defines the mass percentages of sodium hexafluorophosphate, sodium bis(fluorosulfonyl)imide and pentaerythritol bicyclic sulfate in the electrolyte solution, and the three components cooperate and influence each other so that the electrolyte solution has better ionic conductivity and electrical conductivity, thereby reducing the internal resistance of the sodium-ion battery and improving its initial Coulombic efficiency and rate performance. Meanwhile, since the electrolyte solution has good high-temperature stability, it can accelerate the wetting at high temperatures so that good wetting among the electrolyte solution, the electrode and the separator is formed, thereby improving the problem of poor wettability of the electrolyte solution in the sodium-ion battery.

In one specific embodiment, a mass percentage of sodium hexafluorophosphate in the electrolyte solution ranges from 6 wt% to 14 wt%. In this range, sodium hexafluorophosphate can form a better synergistic effect with sodium bis(fluorosulfonyl)imide and pentaerythritol bicyclic sulfate, thereby making an electrolyte solution with better high-temperature stability and higher ionic conductivity.

In one specific embodiment, a mass percentage of pentaerythritol bicyclic sulfate in the electrolyte solution ranges from 1 wt% to 2 wt%. In this range, pentaerythritol bicyclic sulfate can better synergize with sodium hexafluorophosphate and sodium bis(fluorosulfonyl)imide to further improve the storage stability of the electrolyte solution at high temperatures. Meanwhile, when pentaerythritol bicyclic sulfate is applied to the sodium-ion battery, stable and compact SEI films can be formed on the surfaces of positive and negative electrodes earlier in the charge and discharge process, thereby effectively reducing the side reaction between the electrolyte solution and the positive and negative electrodes, enabling the effect of pentaerythritol bicyclic sulfate on improving the stability of the electrolyte solution to be more significant, and enabling the cycle life and the safety performance of the sodium-ion battery to be better.

In one specific embodiment, a mass percentage of sodium bis(fluorosulfonyl)imide in the electrolyte solution ranges from 2 wt% to 8 wt%. In this range, sodium bis(fluorosulfonyl)imide can be better coordinated with pentaerythritol bicyclic sulfate and sodium hexafluorophosphate, making the electrolyte solution more stable at high temperatures, further reducing the sensitivity of the electrolyte solution to temperature, thereby reducing costs. Meanwhile, sodium bis(fluorosulfonyl)imide and sodium hexafluorophosphate can synergize better to effectively inhibit the corrosion of sodium bis(fluorosulfonyl)imide on aluminum foil.

In one specific embodiment, the organic solvent includes at least one of carbonates, fluorocarbonates, carboxylic esters, fluorocarboxylic esters, ethers and fluoroethers. For example, the organic solvent can be at least one of propylene carbonate, ethylene carbonate, dimethyl carbonate, ethyl methyl carbonate, methyl propyl carbonate, propylene carbonate, diethyl carbonate, ethyl acetate, methyl acetate, propyl acetate, butyl acetate, ethylene glycol dimethyl ether, diethylene glycol dimethyl ether, diethylene glycol diethyl ether, and methyl trifluoroethyl carbonate, which is not excessively limit in the present application. When the organic solvent is a mixture of a variety of specific compounds described above, the present application does not excessively limit the ratio between the specific compounds.

In one specific embodiment, the electrolyte solution further includes a sodium salt additive, which includes at least one of sodium perchlorate, sodium bis(oxalato)borate, sodium difluoro(oxalato)borate and sodium bis(trifluoromethylsulfonyl)imide. By adding the sodium salt additive, an anion can be introduced, and the anion can participate in the construction of the outer layer of the solvated structure with a hexafluorophosphate ion and a bis(fluorosulfonyl)imide anion, making the electrolyte solution system more stable so as to further improve the stability of the electrolyte solution at normal or high temperatures.

In addition, the obtained sodium-ion battery can further promote the generation of the SEI film by further adding the sodium salt additive to the electrolyte solution, thereby better avoiding side reactions between the electrolyte solution and the positive and negative electrodes, and improving the stability of the electrolyte system. Meanwhile, the anion in the sodium salt additive is helpful to regulate the sodium ion solvated shell layer, improve the ionic conductivity of the electrolyte solution, reduce the migration resistance of the sodium ion in the electrolyte solution, and further enable the sodium-ion battery to have higher initial Coulombic efficiency and rate performance.

In one specific embodiment, a mass percentage of the sodium salt additive in the electrolyte solution ranges from 0.01 wt% to 1 wt%. In this range, the stability of the electrolyte solution system at normal or high temperatures can be further improved. In addition, the sodium salt additive can also be used to increase the degree of effect of the electrolyte ionic conductivity and electrical conductivity so that the initial Coulombic efficiency and rate performance of the sodium-ion battery can be better.

In one specific embodiment, the electrolyte solution further includes an organic additive, which includes at least one of vinyl ethylene carbonate, fluoroethylene carbonate, vinylene carbonate, 1,6-hexylene diisocyanate, 4-ethynyl-1,3-dioxolan-2-one, trans-difluoroethylene carbonate, 1,3-propane sultone, 1,4-propane sultone, prop-1-ene-1,3-sultone, 1,3,2-dioxathiolane 2,2-dioxide, 4-propyl-1,3,2-dioxathiolane 2,2-dioxide, methylene methanedisulfonate, 1,2-ethanedisulfonic anhydride, tris(trimethylsilyl) borate, succinonitrile, (ethoxy)pentafluorocyclotriphosphazene, tert-butylbenzene, tert-amylbenzene, fluorobenzene, and cyclohexylbenzene. The above-mentioned organic additives have good compatibility with pentaerythritol bicyclic sulfate, and can participate in the construction of the middle layer in the solvated structure to obtain a more stable electrolyte solution, further improving the stability of the electrolyte solution at normal or high temperatures.

In addition, by adding the organic additive, the SEI film can be generated earlier on the surface of the positive and negative electrodes, further reducing the side reaction between the electrolyte solution and the positive and negative electrodes, improving the stability of the electrolyte solution, improving the wetting effect between the electrolyte solution and the positive and negative electrode plates, solving the problem of poor wettability in sodium-ion batteries, and also improving the safety performance of the sodium-ion battery.

In one specific embodiment, a mass percentage of the organic additive in the electrolyte solution ranges from 0.1 wt% to 20 wt%. In this range, the electrolyte solution can have better stability and can further improve the wetting between the electrolyte and the positive and negative electrode plates, shorten the sodium ion transport path, and further improve the cycle life and rate performance of the sodium-ion battery.

A second aspect of the present application provides a sodium-ion battery, including the electrolyte solution of any one of the above-mentioned. Since sodium hexafluorophosphate, sodium bis(fluorosulfonyl)imide and pentaerythritol bicyclic sulfate included in the electrolyte solution cooperate and influence each other, the stability of the electrolyte solution at normal or high temperatures is effectively improved, the cost is reduced, and the conductivity and ion transport rate of the electrolyte solution are also improved. Therefore, the sodium-ion battery not only has higher cycle stability and lower internal resistance at high temperatures, but also has a better wetting effect, which can effectively reduce the production, storage and transportation costs of the sodium-ion battery.

Hereinafter, the sodium-ion battery including the electrolyte solution of the present application will be described in detail by specific examples.

### Example 1

In a glove box filled with argon, organic solvents-40 wt% of propylene carbonate, 20 wt% of ethyl methyl carbonate, and 20 wt% of diethyl carbonate-were mixed, followed by the addition of 1 wt% of fluoroethylene carbonate, 1 wt% of vinylene carbonate, 1 wt% of 1,3-propane sultone, 0.5 wt% of prop-1-ene-1,3-sultone, and 1.5 wt% of pentaerythritol bicyclic sulfate in sequence, and 10 wt% of sodium hexafluorophosphate and 5 wt% of sodium bis(fluorosulfonyl)imide were finally added to the mixture. After stirring evenly, the electrolyte solution of the example was obtained.

### Example 2

In a glove box filled with argon, organic solvents-40.66 wt% of propylene carbonate, 20.32 wt% of ethyl methyl carbonate, and 20.32 wt% of diethyl carbonate-were mixed, followed by the addition of 1 wt% of fluoroethylene carbonate, 1 wt% of vinylene carbonate, 1 wt% of 1,3-propane sultone, 0.5 wt% of prop-1-ene-1,3-sultone, and 0.2 wt% of pentaerythritol bicyclic sulfate in sequence, and 8.5 wt% of sodium hexafluorophosphate and 6.5 wt% of sodium bis(fluorosulfonyl)imide were finally added to the mixture. After stirring evenly, the electrolyte solution of the example was obtained.

### Example 3

In a glove box filled with argon, organic solvents-38.24 wt% of propylene carbonate, 19.13 wt% of ethyl methyl carbonate, and 19.13 wt% of diethyl carbonate-were mixed, followed by the addition of 1 wt% of fluoroethylene carbonate, 1 wt% of vinylene carbonate, 1 wt% of 1,3-propane sultone, 0.5 wt% of prop-1-ene-1,3-sultone, and 5 wt% of pentaerythritol bicyclic sulfate in sequence, and 11.5 wt% of sodium hexafluorophosphate and 3.5 wt% of sodium bis(fluorosulfonyl)imide were finally added to the mixture. After stirring evenly, the electrolyte solution of the example was obtained.

### Example 4

In a glove box filled with argon, organic solvents-40 wt% of propylene carbonate, 20 wt% of ethyl methyl carbonate, and 20 wt% of diethyl carbonate-were mixed, followed by the addition of 1 wt% of fluoroethylene carbonate, 1 wt% of vinylene carbonate, 1 wt% of 1,3-propane sultone, 0.5 wt% of prop-1-ene-1,3-sultone, and 1.5 wt% of pentaerythritol bicyclic sulfate in sequence, and 14.5 wt% of sodium hexafluorophosphate and 0.5 wt% of sodium bis(fluorosulfonyl)imide were finally added to the mixture. After stirring evenly, the electrolyte solution of the example was obtained.

### Example 5

In a glove box filled with argon, organic solvents-40 wt% of propylene carbonate, 20 wt% of ethyl methyl carbonate, and 20 wt% of diethyl carbonate-were mixed, followed by the addition of 1 wt% of fluoroethylene carbonate, 1 wt% of vinylene carbonate, 1 wt% of 1,3-propane sultone, 0.5 wt% of prop-1-ene-1,3-sultone, and 1.5 wt% of pentaerythritol bicyclic sulfate in sequence, and 7 wt% of sodium hexafluorophosphate and 8 wt% of sodium bis(fluorosulfonyl)imide were finally added to the mixture. After stirring evenly, the electrolyte solution of the example was obtained.

### Example 6

In a glove box filled with argon, organic solvents-35 wt% of propylene carbonate, 17.5 wt% of ethyl methyl carbonate, and 17.5 wt% of diethyl carbonate-were mixed, followed by the addition of 1 wt% of fluoroethylene carbonate, 1 wt% of vinylene carbonate, 1 wt% of 1,3-propane sultone, 0.5 wt% of prop-1-ene-1,3-sultone, and 1.5 wt% of pentaerythritol bicyclic sulfate in sequence, and 10 wt% of sodium hexafluorophosphate and 15 wt% of sodium bis(fluorosulfonyl)imide were finally added to the mixture. After stirring evenly, the electrolyte solution of the example was obtained.

### Example 7

In a glove box filled with argon, organic solvents-39.7 wt% of propylene carbonate, 19.9 wt% of ethyl methyl carbonate, and 19.9 wt% of diethyl carbonate-were mixed, followed by the addition of 1 wt% of fluoroethylene carbonate, 1 wt% of vinylene carbonate, 1 wt% of 1,3-propane sultone, 0.5 wt% of prop-1-ene-1,3-sultone, and 1.5 wt% of pentaerythritol bicyclic sulfate in sequence, and 10 wt% of sodium hexafluorophosphate, 5 wt% of sodium bis(fluorosulfonyl)imide and 0.5 wt% of sodium perchlorate were finally added to the mixture. After stirring evenly, the electrolyte solution of the example was obtained.

### Example 8

In a glove box filled with argon, organic solvents-39.4 wt% of propylene carbonate, 19.7 wt% of ethyl methyl carbonate, and 19.7 wt% of diethyl carbonate-were mixed, followed by the addition of 1 wt% of fluoroethylene carbonate, 1 wt% of vinylene carbonate, 1 wt% of 1,3-propane sultone, 0.5 wt% of prop-1-ene-1,3-sultone, and 1.5 wt% of pentaerythritol bicyclic sulfate in sequence, and 10 wt% of sodium hexafluorophosphate, 5 wt% of sodium bis(fluorosulfonyl)imide and 1.2 wt% of sodium perchlorate were finally added to the mixture. After stirring evenly, the electrolyte solution of the example was obtained.

### Example 9

In a glove box filled with argon, organic solvents-30.5 wt% of propylene carbonate, 15.5 wt% of ethyl methyl carbonate, and 15.5 wt% of diethyl carbonate-were mixed, followed by the addition of 6 wt% of fluoroethylene carbonate, 6 wt% of vinylene carbonate, 6 wt% of 1,3-propane sultone, 4 wt% of prop-1-ene-1,3-sultone, and 1.5 wt% of pentaerythritol bicyclic sulfate in sequence, and 10 wt% of sodium hexafluorophosphate and 5 wt% of sodium bis(fluorosulfonyl)imide were finally added to the mixture. After stirring evenly, the electrolyte solution of the example was obtained.

### Example 10

In a glove box filled with argon, organic solvents-41.5 wt% of propylene carbonate, 21 wt% of ethyl methyl carbonate, and 21 wt% of diethyl carbonate-were mixed, followed by the addition of 1.5 wt% of pentaerythritol bicyclic sulfate, and 10 wt% of sodium hexafluorophosphate and 5 wt% of sodium bis(fluorosulfonyl)imide were finally added to the mixture. After stirring evenly, the electrolyte solution of the example was obtained.

### Example 11

In a glove box filled with argon, organic solvents-43 wt% of propylene carbonate, 22 wt% of ethyl methyl carbonate, and 22 wt% of diethyl carbonate-were mixed, followed by the addition of 1 wt% of fluoroethylene carbonate, 1 wt% of vinylene carbonate, 1 wt% of 1,3-propane sultone, 0.5 wt% of prop-1-ene-1,3-sultone, and 1.5 wt% of pentaerythritol bicyclic sulfate in sequence, and 3 wt% of sodium hexafluorophosphate and 5 wt% of sodium bis(fluorosulfonyl)imide were finally added to the mixture. After stirring evenly, the electrolyte solution of the example was obtained.

### Example 12

In a glove box filled with argon, organic solvents-39.5 wt% of propylene carbonate, 19.5 wt% of ethyl methyl carbonate, and 19.5 wt% of diethyl carbonate-were mixed, followed by the addition of 1 wt% of fluoroethylene carbonate, 1 wt% of vinylene carbonate, 1 wt% of 1,3-propane sultone, 0.5 wt% of prop-1-ene-1,3-sultone, and 3 wt% of pentaerythritol bicyclic sulfate in sequence, and 10 wt% of sodium hexafluorophosphate and 5 wt% of sodium bis(fluorosulfonyl)imide were finally added to the mixture. After stirring evenly, the electrolyte solution of the example was obtained.

### Example 13

In a glove box filled with argon, organic solvents-40.7 wt% of propylene carbonate, 20.35 wt% of ethyl methyl carbonate, and 20.35 wt% of diethyl carbonate-were mixed, followed by the addition of 1 wt% of fluoroethylene carbonate, 1 wt% of vinylene carbonate, 1 wt% of 1,3-propane sultone, 0.5 wt% of prop-1-ene-1,3-sultone, and 0.1 wt% of pentaerythritol bicyclic sulfate in sequence, and 10 wt% of sodium hexafluorophosphate and 5 wt% of sodium bis(fluorosulfonyl)imide were finally added to the mixture. After stirring evenly, the electrolyte solution of the example was obtained.

### Example 14

In a glove box filled with argon, organic solvents-40.25 wt% of propylene carbonate, 20.125 wt% of ethyl methyl carbonate, and 20.125 wt% of diethyl carbonate-were mixed, followed by the addition of 1 wt% of fluoroethylene carbonate, 1 wt% of vinylene carbonate, 1 wt% of 1,3-propane sultone, 0.5 wt% of prop-1-ene-1,3-sultone, and 1 wt% of pentaerythritol bicyclic sulfate in sequence, and 10 wt% of sodium hexafluorophosphate and 5 wt% of sodium bis(fluorosulfonyl)imide were finally added to the mixture. After stirring evenly, the electrolyte solution of the example was obtained.

### Example 15

In a glove box filled with argon, organic solvents-39.75 wt% of propylene carbonate, 19.875 wt% of ethyl methyl carbonate, and 19.875 wt% of diethyl carbonate-were mixed, followed by the addition of 1 wt% of fluoroethylene carbonate, 1 wt% of vinylene carbonate, 1 wt% of 1,3-propane sultone, 0.5 wt% of prop-1-ene-1,3-sultone, and 2 wt% of pentaerythritol bicyclic sulfate in sequence, and 10 wt% of sodium hexafluorophosphate and 5 wt% of sodium bis(fluorosulfonyl)imide were finally added to the mixture. After stirring evenly, the electrolyte solution of the example was obtained.

### Example 16

In a glove box filled with argon, organic solvents-44 wt% of propylene carbonate, 22 wt% of ethyl methyl carbonate, and 22 wt% of diethyl carbonate-were mixed, followed by the addition of 1 wt% of fluoroethylene carbonate, 1 wt% of vinylene carbonate, 1 wt% of 1,3-propane sultone, 0.5 wt% of prop-1-ene-1,3-sultone, and 1.5 wt% of pentaerythritol bicyclic sulfate in sequence, and 2 wt% of sodium hexafluorophosphate and 5 wt% of sodium bis(fluorosulfonyl)imide were finally added to the mixture. After stirring evenly, the electrolyte solution of the example was obtained.

### Example 17

In a glove box filled with argon, organic solvents-42 wt% of propylene carbonate, 21 wt% of ethyl methyl carbonate, and 21 wt% of diethyl carbonate-were mixed, followed by the addition of 1 wt% of fluoroethylene carbonate, 1 wt% of vinylene carbonate, 1 wt% of 1,3-propane sultone, 0.5 wt% of prop-1-ene-1,3-sultone, and 1.5 wt% of pentaerythritol bicyclic sulfate in sequence, and 6 wt% of sodium hexafluorophosphate and 5 wt% of sodium bis(fluorosulfonyl)imide were finally added to the mixture. After stirring evenly, the electrolyte solution of the example was obtained.

### Example 18

In a glove box filled with argon, organic solvents-38 wt% of propylene carbonate, 19 wt% of ethyl methyl carbonate, and 19 wt% of diethyl carbonate-were mixed, followed by the addition of 1 wt% of fluoroethylene carbonate, 1 wt% of vinylene carbonate, 1 wt% of 1,3-propane sultone, 0.5 wt% of prop-1-ene-1,3-sultone, and 1.5 wt% of pentaerythritol bicyclic sulfate in sequence, and 14 wt% of sodium hexafluorophosphate and 5 wt% of sodium bis(fluorosulfonyl)imide were finally added to the mixture. After stirring evenly, the electrolyte solution of the example was obtained.

### Example 19

In a glove box filled with argon, organic solvents-37.5 wt% of propylene carbonate, 18.75 wt% of ethyl methyl carbonate, and 18.75 wt% of diethyl carbonate-were mixed, followed by the addition of 1 wt% of fluoroethylene carbonate, 1 wt% of vinylene carbonate, 1 wt% of 1,3-propane sultone, 0.5 wt% of prop-1-ene-1,3-sultone, and 1.5 wt% of pentaerythritol bicyclic sulfate in sequence, and 15 wt% of sodium hexafluorophosphate and 5 wt% of sodium bis(fluorosulfonyl)imide were finally added to the mixture. After stirring evenly, the electrolyte solution of the example was obtained.

### Example 20

In a glove box filled with argon, organic solvents-42.45 wt% of propylene carbonate, 21.225 wt% of ethyl methyl carbonate, and 21.225 wt% of diethyl carbonate-were mixed, followed by the addition of 1 wt% of fluoroethylene carbonate, 1 wt% of vinylene carbonate, 1 wt% of 1,3-propane sultone, 0.5 wt% of prop-1-ene-1,3-sultone, and 1.5 wt% of pentaerythritol bicyclic sulfate in sequence, and 10 wt% of sodium hexafluorophosphate and 0.1 wt% of sodium bis(fluorosulfonyl)imide were finally added to the mixture. After stirring evenly, the electrolyte solution of the example was obtained.

### Example 21

In a glove box filled with argon, organic solvents-41.5 wt% of propylene carbonate, 20.75 wt% of ethyl methyl carbonate, and 20.75 wt% of diethyl carbonate-were mixed, followed by the addition of 1 wt% of fluoroethylene carbonate, 1 wt% of vinylene carbonate, 1 wt% of 1,3-propane sultone, 0.5 wt% of prop-1-ene-1,3-sultone, and 1.5 wt% of pentaerythritol bicyclic sulfate in sequence, and 10 wt% of sodium hexafluorophosphate and 2 wt% of sodium bis(fluorosulfonyl)imide were finally added to the mixture. After stirring evenly, the electrolyte solution of the example was obtained.

### Example 22

In a glove box filled with argon, organic solvents-32.5 wt% of propylene carbonate, 16.25 wt% of ethyl methyl carbonate, and 16.25 wt% of diethyl carbonate-were mixed, followed by the addition of 1 wt% of fluoroethylene carbonate, 1 wt% of vinylene carbonate, 1 wt% of 1,3-propane sultone, 0.5 wt% of prop-1-ene-1,3-sultone, and 1.5 wt% of pentaerythritol bicyclic sulfate in sequence, and 10 wt% of sodium hexafluorophosphate and 20 wt% of sodium bis(fluorosulfonyl)imide were finally added to the mixture. After stirring evenly, the electrolyte solution of the example was obtained.

### Example 23

In a glove box filled with argon, organic solvents-41.7 wt% of propylene carbonate, 20.85 wt% of ethyl methyl carbonate, and 20.85 wt% of diethyl carbonate-were mixed, followed by the addition of 0.1 wt% of fluoroethylene carbonate and 1.5 wt% of pentaerythritol bicyclic sulfate in sequence, and 10 wt% of sodium hexafluorophosphate and 5 wt% of sodium bis(fluorosulfonyl)imide were finally added to the mixture. After stirring evenly, the electrolyte solution of the example was obtained.

### Example 24

In a glove box filled with argon, organic solvents-31.75 wt% of propylene carbonate, 15.875 wt% of ethyl methyl carbonate, and 15.875 wt% of diethyl carbonate-were mixed, followed by the addition of 6 wt% of fluoroethylene carbonate, 6 wt% of vinylene carbonate, 6 wt% of 1,3-propane sultone, 2 wt% of prop-1-ene-1,3-sultone, and 1.5 wt% of pentaerythritol bicyclic sulfate in sequence, and 10 wt% of sodium hexafluorophosphate and 5 wt% of sodium bis(fluorosulfonyl)imide were finally added to the mixture. After stirring evenly, the electrolyte solution of the example was obtained.

### Example 25

In a glove box filled with argon, organic solvents-39.994 wt% of propylene carbonate, 19.998 wt% of ethyl methyl carbonate, and 19.998 wt% of diethyl carbonate-were mixed, followed by the addition of 1 wt% of fluoroethylene carbonate, 1 wt% of vinylene carbonate, 1 wt% of 1,3-propane sultone, 0.5 wt% of prop-1-ene-1,3-sultone, and 1.5 wt% of pentaerythritol bicyclic sulfate in sequence, and 10 wt% of sodium hexafluorophosphate, 5 wt% of sodium bis(fluorosulfonyl)imide and 0.01 wt% of sodium perchlorate were finally added to the mixture. After stirring evenly, the electrolyte solution of the example was obtained.

### Example 26

In a glove box filled with argon, organic solvents-39.5 wt% of propylene carbonate, 19.75 wt% of ethyl methyl carbonate, and 19.75 wt% of diethyl carbonate-were mixed, followed by the addition of 1 wt% of fluoroethylene carbonate, 1 wt% of vinylene carbonate, 1 wt% of 1,3-propane sultone, 0.5 wt% of prop-1-ene-1,3-sultone, and 1.5 wt% of pentaerythritol bicyclic sulfate in sequence, and 10 wt% of sodium hexafluorophosphate, 5 wt% of sodium bis(fluorosulfonyl)imide and 1 wt% of sodium perchlorate were finally added to the mixture. After stirring evenly, the electrolyte solution of the example was obtained.

### Comparative Example 1

The preparation method of the electrolyte solution in this comparative example was substantially the same as that in Example 1, except that ethylene sulfate was used instead of pentaerythritol bicyclic sulfate.

### Comparative Example 2

The preparation method of the electrolyte solution in this comparative example was substantially the same as that in Example 1, except that sodium difluorophosphate was used instead of pentaerythritol bicyclic sulfate.

### Comparative Example 3

The preparation method of the electrolyte solution in this comparative example was substantially the same as that in Example 1, except that a mixture of ethylene sulfate and sodium difluorophosphate was used instead of pentaerythritol bicyclic sulfate, where the mass percentage of sodium difluorophosphate in the electrolyte solution was 0.75 wt%, and the mass percentage of ethylene sulfate in the electrolyte solution was 0.75 wt%. Other components were unchanged.

### Comparative Example 4

The preparation method of the electrolyte solution in this comparative example was substantially the same as that in Example 1, except that sodium perchlorate was used instead of sodium bis(fluorosulfonyl)imide.

### Comparative Example 5

The preparation method of the electrolyte solution in this comparative example was substantially the same as that in Example 1, except that the mass percentage of pentaerythritol bicyclic sulfate in the electrolyte solution was 6 wt%. In this comparative example, the mass percentage of propylene carbonate in the electrolyte solution was 37.76 wt%, the mass percentage of ethyl methyl carbonate in the electrolyte solution was 18.87 wt%, the mass percentage of diethyl carbonate in the electrolyte solution was 18.87 wt%, and other components were unchanged.

### Comparative Example 6

The preparation method of the electrolyte solution in this comparative example was substantially the same as that in Example 1, except that lithium hexafluorophosphate was used instead of sodium hexafluorophosphate, and lithium bis(fluorosulfonyl)imide was used instead of sodium bis(fluorosulfonyl)imide. Other components were unchanged.

### Comparative Example 7

The preparation method of the electrolyte solution in this comparative example was substantially the same as that in Example 1, except that the mass percentage of sodium hexafluorophosphate in the electrolyte solution was adjusted to 17 wt%. In this comparative example, the mass percentage of propylene carbonate in the electrolyte solution was 37 wt%, the mass percentage of ethyl methyl carbonate in the electrolyte solution was 18 wt%, the mass percentage of diethyl carbonate in the electrolyte solution was 18 wt%, and other components were unchanged.

### Comparative Example 8

The preparation method of the electrolyte solution in this comparative example was substantially the same as that in Example 1, except that the mass percentage of sodium bis(fluorosulfonyl)imide in the electrolyte solution was adjusted to 22 wt%. In this comparative example, the mass percentage of propylene carbonate in the electrolyte solution was 31 wt%, the mass percentage of ethyl methyl carbonate in the electrolyte solution was 16 wt%, the mass percentage of diethyl carbonate in the electrolyte solution was 16 wt%, and other components were unchanged.

### Test Example

The electrolyte solutions prepared in the above-mentioned Examples and Comparative Examples were divided into a first group of electrolyte solutions, a second group of electrolyte solutions and a third group of electrolyte solutions. The first group of electrolyte solutions was the freshly prepared electrolyte solution, the second group of electrolyte solutions was stored at 45°C for 24 hours, and the third group of electrolyte solutions was stored at room temperature of 25°C for 180 days. The first group of electrolyte solutions, the second group of electrolyte solutions and the third group of electrolyte solutions were made into sodium-ion batteries, respectively. The preparation steps of sodium-ion batteries are as follows:
90 wt% of NaNi_{1/3}Mn_{1/3}Fe_{1/3}O₂ powder, 5 wt% of polyvinylidene fluoride, 5 wt% of acetylene black and the solvent N-methylpyrrolidone were mixed and stirred to obtain a positive electrode active slurry. The positive electrode active slurry was coated on both surfaces of an aluminum foil with a thickness of 16 µm and dried at 130°C for 12 hours. After drying, the resultant was then rolled and slit, and the tabs were welded to the resultant to obtain the positive electrode plate. The thickness of the single-sided positive electrode material layer was 58 µm. After cutting, the positive electrode plate was 558 mm in length and 55 mm in width. 89 wt% of hard carbon, 1 wt% of conductive carbon black Super-P and 10 wt% of polyvinylidene fluoride were mixed and stirred to obtain a negative electrode active slurry. The negative electrode active slurry was coated on both surfaces of an aluminum foil with a thickness of 16 µm and dried at 120°C for 12 hours. After drying, the resultant was then rolled and slit, and the tabs were welded to the resultant to obtain the negative electrode plate. The thickness of the single-sided negative electrode material layer was 67 µm. After cutting, the negative electrode plate was 708 mm in length and 59 mm in width. The separator was ceramic-coated PE separator. The separator was purchased from SENIOR, and the model was PE ceramic 16+4. The total thickness of the separator was 20 µm.

The positive electrode plate, separator and negative electrode plate prepared above were stacked in order so that the separator was positioned between the positive electrode plate and the negative electrode plate to play an isolation role, and the stacked materials were winded to obtain the electrode assembly. The electrode assembly was packed into an aluminum-plastic film packaging bag, and the moisture was removed at 85°C. The first group of electrolyte solutions, the second group of electrolyte solutions and the third group of electrolyte solutions prepared above were injected into the packaging bag, respectively. The electrolyte injection coefficient was 5 g/Ah, and the sodium-ion battery was obtained through the procedures of vacuum packaging, standing, formation, shaping, sorting and the like. The time of standing was 48 hours. The step of formation was being charged to 3.4 V at 0.02 C, then charged to 3.8 V at 0.2 C, and then charged to the upper limit voltage of the formation of 4 V at 0.5 C. The temperature of formation was 45°C.

The sodium-ion batteries including the first group of electrolyte solutions, the sodium-ion batteries including the second group of electrolyte solutions, and the sodium-ion batteries including the third group of electrolyte solutions prepared as described above were subjected to the initial Coulombic efficiency, cycle performance, DCR direct current internal resistance and wettability tests:

### (1) Initial Coulombic efficiency test at 25°C

After the formation of the sodium-ion battery was completed, the total charging capacity during the entire formation process was recorded and denoted as C1. After being aged at a high temperature of 45°C for 24 hours, the initial Coulombic efficiency test was performed at 25°C. The test steps were as follows: the battery was charged to 4.0 V at a current of 0.2 C, and then charged at a constant voltage with the cut-off current being 0.05 C. The total charging capacity during the entire charging process was recorded and denoted as C2. After resting for 5 minutes, the battery was discharged at a current of 0.2 C to 1.5 V, and the discharge capacity was recorded and denoted as C3. The initial Coulombic efficiency at 25°C was calculated as: Initial efficiency = C3/(C1 + C2) × 100%.

### (2) Cycle performance

The sodium-ion batteries prepared above were charged at a constant current of 0.2 C to 3.9 V, and then charged at a constant voltage of 3.9 V with the cut-off current being 0.05 C at 25°C and 45°C, respectively. After resting for 10 minutes, the batteries were discharged at a constant current of 0.5 C to 3.0 V. The cycle of steps was repeated, and the number of cycles when the capacity decayed to 80% of the first cycle capacity was recorded. The test results are shown in Tables 1, 2 and 3.

### (3) DCR direct current internal resistance test

The sodium-ion batteries prepared above were subjected to the direct current internal resistance test at 0°C, 25°C and 45°C, respectively. The calculation and test steps were as follows: the battery was charged to 4 V at a constant current of 0.2 C, and then charged at a constant voltage of 4 V with the cut-off current being 0.05 C. After resting for 5 minutes, the battery was discharged at a current of 1 C for 30 minutes, and then placed in a high-low temperature charge-discharge test chamber, and the corresponding test temperature was set. After resting for 2 hours, the battery was discharged at a current of 2 C for 10 seconds, the voltage values of the first and last seconds of the discharge were recorded and denoted as V1 and V2, respectively. Direct current internal resistance was calculated as: DCR = (V1 - V2)/2C. The test results are shown in Tables 1, 2 and 3.

### (4) Wettability test

The electrolyte solution was filled into a pipette with a measuring range of 1 to 5 µL in the glove box at 25°C, and then dropped onto the positive and negative electrode plates, respectively. The positive electrode material layer had a compaction density of 3.5 g/cm³ and a single-sided thickness of 58 µm, and the positive electrode plate was a square with a side length of 55 mm; the negative electrode material layer had a compaction density of 1.65 g/cm³ and a single-sided thickness of 67 µm, and the negative electrode plate was a square with a side length of 59 mm. The time required for one drop of electrolyte solution prepared in the above Examples and Comparative Examples to be completely absorbed by the electrode plate was recorded. The test results are shown in Tables 1, 2 and 3. Table 1 shows the test results of the sodium-ion battery including the first group of electrolyte solutions, Table 2 shows the test results of the sodium-ion battery including the second group of electrolyte solutions, and Table 3 shows the test results of the sodium-ion battery including the third group of electrolyte solutions.

**Table 1**

| | **Number of cycles at 25°C** | **Number of cycles at 45°C** | **Wettability of the positive electrode plate at normal-temperature s** | **Wettability of the negative electrode plate at normal-temperature s** | **Initial efficiency at 25°C %** | **Direct current internal resistance at 0°C/25°C/45°C mΩ** |
|---|---|---|---|---|---|---|
| **Example 1** | 1850 | 1350 | 47 | 55 | 82.6 | 197/88/67 |
| **Example 2** | 1800 | 1280 | 43 | 50 | 82.4 | 199/91/74 |
| **Example 3** | 1750 | 1150 | 51 | 62 | 82.3 | 214/101/87 |
| **Example 4** | 1780 | 1190 | 53 | 66 | 82.1 | 217/108/88 |
| **Example 5** | 1845 | 1348 | 46 | 53 | 82.3 | 200/90/69 |
| **Example 6** | 1580 | 950 | 57 | 66 | 82.4 | 189/85/66 |
| **Example 7** | 1880 | 1360 | 46 | 54 | 82.7 | 187/84/63 |
| **Example 8** | 1690 | 1010 | 49 | 59 | 82.3 | 197/85/63 |
| **Example 9** | 1570 | 970 | 66 | 71 | 81.6 | 209/95/76 |
| **Example 10** | 1550 | 980 | 63 | 69 | 81.5 | 207/94/73 |
| **Example 11** | 1680 | 990 | 55 | 66 | 82.1 | 211/101/77 |
| **Example 12** | 1670 | 1020 | 54 | 63 | 82.0 | 221/108/81 |
| **Example 13** | 1730 | 1250 | 47 | 56 | 82.1 | *202*/*98*/*74* |
| **Example 14** | 1780 | 1300 | 47 | 56 | 82.4 | 199/93/69 |
| **Example 15** | 1810 | 1320 | 48 | 55 | 82.5 | 198/89/67 |
| **Example 16** | 1560 | 1050 | 41 | 50 | 81.8 | 213/105/80 |
| **Example 17** | 1650 | 1180 | 44 | 53 | 82.2 | 206/96/74 |
| **Example 18** | 1880 | 1380 | 47 | 56 | 82.7 | 195/86/64 |
| **Example 19** | 1890 | 1410 | 48 | 56 | 82.8 | 194/85/64 |
| **Example 20** | 1690 | 1260 | 48 | 55 | 82.2 | 212/93/71 |
| **Example 21** | 1850 | 1350 | 47 | 55 | 82.4 | 206/91/69 |
| **Example 22** | 1790 | 1290 | 52 | 61 | 84.6 | 167/76/58 |
| **Example 23** | 1590 | 1010 | 63 | 68 | 81.6 | 207/94/73 |
| **Example 24** | 1580 | 980 | 65 | 70 | 82.9 | 219/102/84 |
| **Example 25** | **1**860 | 1360 | 47 | 56 | 82.7 | 194/86/65 |
| **Example 26** | 1790 | 1250 | 46 | 54 | 82.8 | 192/84/64 |
| **Comparative Example 1** | 1220 | 750 | 78 | 89 | 80.1 | 237/118/97 |
| **Comparative Example 2** | 1420 | 850 | 85 | 96 | 80.2 | 226/119/94 |
| **Comparative Example 3** | 1450 | 860 | 82 | 94 | 80.1 | 224/112/96 |
| **Comparative Example 4** | 1527 | 896 | 73 | 79 | 81.3 | 217/107/89 |
| **Comparative Example 5** | 1350 | 760 | 88 | 125 | 79.5 | 314/148/127 |
| **Comparative Example 6** | 420 | 240 | 51 | 59 | 74.3 | 291/128/124 |
| **Comparative Example 7** | 1390 | 780 | 79 | 102 | 77.1 | 241/128/101 |
| **Comparative Example 8** | 1430 | 750 | 75 | 97 | 78.3 | 227/122/97 |

**Table 2**

| | **Number of cycles at 25°C** | **Number of cycles at 45°C** | **Wettability of the positive electrode plate at normal-temperature s** | **Wettability of the negative electrode plate at normal-temperature s** | **Initial efficiency at 25°C %** | **Direct current internal resistance at 0°C/25°C/45°C mΩ** |
|---|---|---|---|---|---|---|
| **Example 1** | 1508 | 1076 | 48 | 55 | 82.5 | 201/89/69 |
| **Example 2** | 1424 | 1037 | 45 | 53 | 82.3 | 201/93/77 |
| **Example 3** | 1365 | 920 | 52 | 62 | 82.3 | 216/103/89 |
| **Example 4** | 1406 | 964 | 53 | 68 | 82.0 | 220/109/90 |
| **Example 5** | 1348 | 969 | 49 | 55 | 82.0 | 203/92/73 |
| **Example 6** | 1279 | 789 | 60 | 67 | 82.3 | 193/87/69 |
| **Example 7** | 1560 | 1102 | 50 | 60 | 82.6 | 189/86/66 |
| **Example** 8 | 1411 | 798 | 51 | 61 | 82.2 | 200/88/66 |
| **Example 9** | 1209 | 747 | 67 | 74 | 81.1 | 211/96/78 |
| **Example 10** | 1364 | 804 | 65 | 71 | 80.9 | 209/97/75 |
| **Example 11** | 1487 | 792 | 56 | 68 | 81.5 | 213/102/79 |
| **Example 12** | 1458 | 796 | 55 | 66 | 81.2 | 224/111/83 |
| **Example 13** | 1288 | 876 | 51 | 59 | 81.1 | 239/128/94 |
| **Example 14** | 1404 | 1057 | 49 | 59 | 82.3 | 202/95/70 |
| **Example 15** | 1490 | 1063 | 49 | 55 | 82.5 | 203/91/70 |
| **Example 16** | 1236 | 714 | 46 | 54 | 81.7 | 218/108/81 |
| **Example 17** | 1313 | 841 | 47 | 55 | 81.9 | 208/99/76 |
| **Example 18** | 1549 | 1119 | 50 | 57 | 82.6 | 198/89/65 |
| **Example 19** | 1570 | 1152 | 52 | 62 | 82.7 | 199/87/65 |
| **Example** 20 | 1411 | 938 | 47 | 54 | 82.1 | 214/95/72 |
| **Example 21** | 1489 | 1027 | 48 | 58 | 81.9 | 209/93/71 |
| **Example 22** | 1434 | 1004 | 54 | 63 | 84 | 169/77/59 |
| **Example 23** | 1397 | 832 | 64 | 70 | 81 | 209/97/74 |
| **Example 24** | 1278 | 756 | 66 | 74 | 81.1 | 210/96/76 |
| **Example 25** | 1518 | 1086 | 48 | 56 | 82.6 | 196/87/66 |
| **Example 26** | 1414 | 1007 | 48 | 57 | 82.7 | 195/88/67 |
| **Comparative Example 1** | 340 | 150 | 88 | 95 | 69.9 | 441/218/167 |
| **Comparative Example 2** | 951 | 534 | 95 | 105 | 80.8 | 326/149/124 |
| **Comparative Example 3** | 624 | 230 | 93 | 107 | 71.8 | 424/212/196 |
| **Comparative Example 4** | 1128 | 633 | 81 | 89 | 79.5 | 317/134/114 |
| **Comparative Example 5** | 920 | 494 | 98 | 137 | 79.5 | 354/278/227 |
| **Comparative Example 6** | 80 | 30 | 66 | 86 | 64.9 | 441/298/184 |
| **Comparative Example 7** | 1070 | 585 | 79 | 112 | 76.3 | 291/168/131 |
| **Comparative Example 8** | 1073 | 459 | 85 | 99 | 75.9 | 297/162/137 |

**Table 3**

| | **Number of cycles at 25°C** | **Number of cycles at 45°C** | **Wettability of the positive electrode plate at normal-temperature s** | **Wettability of the negative electrode plate at normal-temperature s** | **Initial efficiency at 25°C %** | **Direct current internal resistance at 0°C/25°C/45°C mΩ** |
|---|---|---|---|---|---|---|
| **Example 1** | 1488 | 1036 | 47 | 57 | 82.1 | 203/88/67 |
| **Example 2** | 1421 | 1021 | 48 | 56 | 82.0 | *199*/*95*/*72* |
| **Example 3** | 1355 | 923 | 54 | 62 | 82.1 | 206/101/86 |
| **Example 4** | 1369 | 951 | 54 | 67 | 81.8 | 215/103/90 |
| **Example 5** | 1328 | 946 | 49 | 56 | 81.4 | 201/90/75 |
| **Example 6** | 1273 | 785 | 61 | 64 | 82.1 | 191/89/71 |
| **Example 7** | 1555 | 1082 | 53 | 65 | 82.3 | 190/85/63 |
| **Example 8** | 1402 | 778 | 55 | 64 | 82.1 | 210/89/68 |
| **Example 9** | 1187 | 750 | 68 | 75 | 81.3 | 216/97/80 |
| **Example 10** | 1338 | 798 | 65 | 72 | 80.7 | 215/99/78 |
| **Example 11** | 1457 | 788 | 60 | 69 | 81.3 | 223/107/80 |
| **Example 12** | 1448 | 786 | 59 | 70 | 82.2 | 234/118/90 |
| **Example 13** | 1268 | 836 | 50 | 61 | 81.2 | 242/135/106 |
| **Example 14** | 1401 | 991 | 52 | 62 | 82.0 | 205/108/74 |
| **Example** 15 | 1455 | 1021 | 51 | 55 | 82.0 | 204/94/69 |
| **Example 16** | 1199 | 701 | 46 | 56 | 81.3 | 224/119/91 |
| **Example 17** | 1233 | 818 | 47 | 57 | 81.3 | 217/108/83 |
| **Example 18** | 1523 | 1215 | 51 | 59 | 82.3 | 203/91/69 |
| **Example 19** | 1565 | 1132 | 55 | 60 | 82.4 | 199/89/67 |
| **Example 20** | 1402 | 988 | 44 | 56 | 82 | 216/95/76 |
| **Example 21** | 1467 | 1030 | 49 | 59 | 82.1 | *208*/*98*/*74* |
| **Example 22** | 1378 | 1008 | 54 | 64 | 83.8 | 168/76/61 |
| **Example 23** | 1367 | 828 | 68 | 71 | 81.4 | *214*/*97*/*75* |
| **Example 24** | 1218 | 786 | 67 | 74 | 82.1 | *214*/*95*/*78* |
| **Example 25** | 1498 | 1046 | 47 | 58 | 82.2 | 194/88/66 |
| **Example 26** | 1411 | 991 | 51 | 60 | 82.4 | *193*/*84*/*65* |
| **Comparative Example 1** | 328 | 136 | 85 | 93 | 70.9 | 471/208/187 |
| **Comparative Example 2** | 892 | 531 | 100 | 103 | 80.6 | 336/153/138 |
| **Comparative Example 3** | 598 | 234 | 96 | 109 | 69.8 | 435/209/207 |
| **Comparative Example 4** | 1018 | 596 | 85 | 92 | 76.5 | 323/147/121 |
| **Comparative Example 5** | 879 | 478 | 102 | 121 | 78.5 | 375/285/289 |
| **Comparative Example 6** | 89 | 42 | 65 | 85 | 65.1 | 436/314/189 |
| **Comparative Example 7** | 985 | 547 | 84 | 106 | 75.4 | 301/172/167 |
| **Comparative Example 8** | 995 | 529 | 87 | 103 | 75.1 | 311/182/149 |

As shown in Table 1 and Table 2, the electrolyte solutions of Examples 1-26 have higher high-temperature stability. After storage at high temperatures for 24 hours, the sodium-ion batteries including these electrolytes showed only minor decreases in cycle performance, wettability, initial Coulombic efficiency and direct current internal resistance. As shown in Table 2, the maximum number of cycles at 25°C can reach up to 1570, and the maximum number of cycles at 45°C can reach up to 1152. In contrast, after the electrolyte solutions of Comparative Examples 1-8 were stored at high temperatures, the cycle performance, wettability, initial Coulombic efficiency and direct current internal resistance of the sodium-ion batteries including these electrolyte solutions reduced significantly, and the maximum number of cycles at 25°C was only 1128, and the maximum number of cycles at 45°C was only 633. These results demonstrate that the electrolyte solution of the present application has higher high-temperature storage performance.

As shown in Tables 2 and 3, after the electrolyte solutions of Examples 1-26 were stored at 45°C for 24 hours and at 25°C for 180 days, the relevant properties of the prepared sodium-ion batteries did not change much, and only slightly reduced. However, after the electrolyte solutions of Comparative Examples 1-8 were stored under the same conditions, the relevant properties of the prepared sodium-ion batteries reduced significantly. It can be seen that the electrolyte solution of the present application has excellent stability and can be stored in harsh environment, such as high temperatures, and has a longer storage life.

Finally, it should be noted that the above embodiments are only used to illustrate the technical solutions of the present application rather than to limit them. Although the present application is described in detail with reference to the above-mentioned embodiments, those skilled in the art should understand that the technical solutions described in the above-mentioned embodiments of the present application can be modified, or part or all of the technical features thereof can be replaced equivalently, without deviating the essence of the corresponding technical solutions from the scope of the technical solutions of the embodiments of the present application.

## Claims

1. An electrolyte solution, comprising a sodium salt, an additive and an organic solvent, wherein the sodium salt comprises sodium hexafluorophosphate and sodium bis(fluorosulfonyl)imide, and the additive comprises pentaerythritol bicyclic sulfate; and
the electrolyte solution comprises, in mass percentage: 2 to 15 wt% of sodium hexafluorophosphate, 0.1 to 20 wt% of sodium bis(fluorosulfonyl)imide, 0.1 to 5 wt% of pentaerythritol bicyclic sulfate.

2. The electrolyte solution according to claim 1, wherein a mass percentage of sodium hexafluorophosphate in the electrolyte solution ranges from 6 wt% to 14 wt%.

3. The electrolyte solution according to claim 1 or 2, wherein a mass percentage of pentaerythritol bicyclic sulfate in the electrolyte solution ranges from 1 wt% to 2 wt%.

4. The electrolyte solution according to any one of claims 1 to 3, wherein a mass percentage of sodium bis(fluorosulfonyl)imide in the electrolyte solution ranges from 2 wt% to 8 wt%.

5. The electrolyte solution according to any one of claims 1 to 4, wherein the organic solvent comprises at least one of carbonates, fluorocarbonates, carboxylic esters, fluorocarboxylic esters, ethers and fluoroethers.

6. The electrolyte solution according to any one of claims 1 to 5, wherein the electrolyte solution further comprises a sodium salt additive, and the sodium salt additive comprises at least one of sodium perchlorate, sodium bis(oxalato)borate, sodium difluoro(oxalato)borate and sodium bis(trifluoromethylsulfonyl)imide.

7. The electrolyte solution according to claim 6, wherein a mass percentage of the sodium salt additive in the electrolyte solution ranges from 0.01 wt% to 1 wt%.

8. The electrolyte solution according to any one of claims 1 to 7, wherein the electrolyte solution further comprises an organic additive, and the organic additive comprises at least one of vinyl ethylene carbonate, fluoroethylene carbonate, vinylene carbonate, 1,6- hexamethylene diisocyanate, 4-ethynyl-1,3-dioxolan-2-one, trans-difluoroethylene carbonate, 1,3-propane sultone, 1,4-propane sultone, prop-1-ene-1,3-sultone, 1,3,2-dioxathiolane 2,2-dioxide, 4-propyl-1,3,2-dioxathiolane 2,2-dioxide, methylene methanedisulfonate, 1,2-ethanedisulfonic anhydride, tris(trimethylsilyl) borate, succinonitrile, (ethoxy)pentafluorocyclotriphosphazene, tert-butylbenzene, tert-amylbenzene, fluorobenzene, and cyclohexylbenzene.

9. The electrolyte solution according to claim 8, wherein a mass percentage of the organic additive in the electrolyte solution ranges from 0.1 wt% to 20 wt%.

10. A sodium-ion battery, comprising the electrolyte solution according to any one of claims 1 to 9.
